# EUROPÄISCHE PATENTSCHRIFT

(11) **EP 1 963 155 B1**
(45) Veröffentlichungstag und Bekanntmachung des Hinweises auf die Patenterteilung: **30.07.2014**
(21) Anmeldenummer: 06829863.7
(22) Anmeldetag: 22.12.2006
(51) Int. Cl.: B60T 11/16, F16D 25/12

(54) **BETÄTIGUNGSARMATUR**
ACTUATING ARMATURE
FERRURE D ACTIONNEMENT

(30) Priorität: 22.12.2005 DE 102005062062
(43) Veröffentlichungstag der Anmeldung: 03.09.2008
(73) Patentinhaber: Gustav Magenwirth GmbH & Co. KG, 72574 Bad Urach (DE)
(72) Erfinder: CHERUBIN, Frank, 72574 Bad Urach (DE)
(74) Vertreter: Andrae | Westendorp Patentanwälte Partnerschaft
(86) Internationale Anmeldenummer: PCT/EP2006/012491
(87) Internationale Veröffentlichungsnummer: WO 2007/076982

(56) Entgegenhaltungen:
- DE-A1- 3 436 327
- DE-A1- 10 113 333
- DE-C- 876 956
- GB-A- 549 464
- GB-A- 879 758
- GB-A- 2 099 094

## Beschreibung

Die Erfindung bezieht sich auf eine Betätigungsarmatur, insbesondere Brems-, Kupplungs- und/oder Türschlossbetätigungsarmatur gemäß dem Oberbegriff von Anspruch 1.

Derartige Armaturen werden insbesondere an ein- oder mehrspurigen Fahrzeugen als am Lenker befestigte Handbetätigungselemente oder im Fußraum befestigte Fußbetätigungselemente zum Bremsen beziehungsweise Kuppeln verwendet. Denkbar sind auch andere Anwendungen, beispielsweise als Betätigungselement zur Ansteuerung und Betätigung von Bremsen bei Modellfahrzeugen.

Die DE 196 31 249 C2 zeigt eine Betätigungsarmatur mit einer sogenannten Schnüffellochbohrung, die im unbetätigten Zustand eine Verbindung zwischen der Druckkammer und dem Vorratsbehälter herstellt, durch welche Volumina ausgeglichen werden können.

Aus der EP 0 607 370 B2 ist eine Betätigungsarmatur mit einem sogenannten Zentralventil bekannt, welches im Kolben positioniert ist und im unbetätigten Zustand durch einen positionierten feststehenden Anschlag geöffnet wird. Dadurch entsteht eine Verbindung zwischen der Druckkammer und dem Vorratsbehälter, durch welche Volumina ausgeglichen werden können.

Nachteilig an obigen Konstruktionen ist, dass diese jeweils durch Vorratsbehälter großzügig bauen und diese Vorratsbehälter zusätzliche Elemente wie Verschlussdeckel, Dichtungen etc. benötigen.

Die DE 34 36 327 Al offenbart eine Betätigungsarmatur gemäß dem Oberbegriff von Anspruch 1.

Bei der dort offenbarten Betätigungsarmatur ist die den Ausgleichsraum begrenzende als Blag ausgebildete Schutzkappe gleichzeitig die Sekundärdichtung. Da der Ausgleichsraum und insbesondere die Schutzkappe außerhalb des Zylinderraums und des Kolbens ausgebildet ist, ergibt sich der Nachteil, dass die Betätigungsarmatur nicht kompakt und wegen der außen angeordneten Sekundärdichtung störanfällig ist.

Es besteht daher insbesondere die Aufgabe, eine Betätigungsarmatur der eingangs genannten Art zu schaffen, welche kompakt baut, sowie kostengünstig und teilereduziert herstellbar ist.

Die Aufgabe wird mit einer Betätigungsarmatur gemäß Anspruch 1 gelöst. Vorteilhafte Ausgestaltungen der Erfindung sind in den abhängigen Ansprüchen ausgebildet.

Vorteilhafterweise kann ein Federelement vorgesehen sein, das ein einen Ausgleichsraum begrenzendes Übertragungselement vorspannt. Dadurch kann das System in einer beliebigen Orientierung angeordnet werden, weil das Nachfließen der Flüssigkeit aus dem Ausgleichsraum in das System nicht mehr durch den Luftdruck sondern mittels der Federkraft bewirkt werden kann. Dabei kann vorzugsweise auch ein Ausgleichsraum innerhalb des Zylinderraums und/oder des Kolbens angeordnet sein.

Vorteilhafterweise kann eine Ventileinrichtung innerhalb des Kolbens angeordnet sein.

Erfindungsgemäß ist der Kolben in dem Zylinderraum zwischen einem als Druckraum fungierenden Bereich des Zylinderraums und dem Ausgleichsraum angeordnet.

Vorteilhafterweise kann in dem Kolben ein Durchgang mit einer Ventileinrichtung ausgebildet sein, der den als Druckraum fungierenden Bereich des Zylinderraums mit dem Ausgleichsraum verschließbar verbindet. Dabei kann bei der Betätigung der Betätigungsarmatur die Ventileinrichtung schließen und anschließend den Kolben mit der Betätigungskraft beaufschlagen. Weiter kann die Ventileinrichtung eine Ventilnadel und einen an dem Durchgang ausgebildeten Ventilsitz aufweisen.

Vorteilhafterweise kann der Kolben einen als der Ausgleichsraum fungierenden auf der dem Zylinderraum abgewandten Seite liegenden Hohlraum aufweisen.

Vorteilhafterweise kann der Kolben eine Bohrung aufweisen, welche bei Betätigung des Kolbens mittels eines Ventils verschließbar ist und eine Abtrennung des Ausgleichsraumes vom als Druckraum fungierenden Bereich des Zylinderraums bewerkstelligt.

Vorteilhafterweise kann auf die eine Seite des Ventils eine Kraft aufbringbar sein, wobei das Ventil einen kleinen Weg zurücklegen muss, bis die andere Seite mit der Bohrung des Kolbens einen Ventilsitz bildet und die Bohrung verschließt, wobei bei weiterer Krafteinleitung die nun formschlüssige Verbindung die eingeleitete Kraft auf den Kolben überträgt, so dass von diesem eine gewünschte Verdrängungsbewegung im als Druckraum fungierenden Bereich des Zylinderraums bewerkstelligbar ist. Dabei kann der kleine vom Ventil zurückzulegende Weg in einem Bereich zwischen 0,1 mm und 5 mm, vorzugsweise zwischen 0,2 mm und 3mm, weiter vorzugsweise zwischen 0,3 mm und 2 mm und bevorzugt bei ungefähr 1 mm liegt.

Vorteilhafterweise kann das Betätigungselement als Hebel oder Druckstange ausgeführt sein.

Erfindungsgemäß kann das mit der Bohrung einen Ventilsitz realisierende Ende des Ventils mit kegelartiger Form ausgeführt sein, wobei dessen anderes Ende zur Krafteinleitung mit einer Fläche ausgebildet ist, auf welche mittels einem als Rolle ausgebildeten Übertragungselement die auf das Ventil einzuleitende Kraft vom Betätigungselement übertragbar ist.

Vorteilhafterweise kann auf dem Ventil ein den Ausgleichsraum nach außen (gegenüber der Umgebung) begrenzendes Dichtelement verschiebbar angeordnet sein, wobei sich das Dichtelement auf der dem Ausgleichsraum abgewandten Seite gegen ein Federelement abstützt und der Ausgleichsraum variabel und/oder automatisch dem aufzunehmenden Flüssigkeitsvolumen anpassbar ist. Dabei kann ein Übertragungselement zwischen dem Dichtelement und dem Federelement angeordnet sein. Das kann einen Schutz des Dichtelements vor Verkippen und Beschädigung bieten.

Damit kann der Vorteil erzielt werden, dass unabhängig von der Stellung des Dichtelementes im Ausgleichsraum bei Kraftbeaufschlagung des Kolbens zu jeder Zeit das immer gleiche Volumen im als Druckraum fungierenden Bereich des Zylinderraums verdrängbar ist, wobei der Druckpunkt des Hydrauliksystems dadurch unverändert bleibt.

Vorteilhafterweise kann in unbetätigter Stellung mittels dem Federelement eine Bewegung des Ventils aus dem Ventilsitz heraus realisierbar sein, wobei entweder durch das Federelement und/oder den im System herrschenden Flüssigkeitsdruck das Ventil zu öffnen ist. Dabei kann ein durch Erwärmung der Hydraulikflüssigkeit entstehender Volumenzuwachs über das Ventil in den Ausgleichsraum strömen und entsprechend der Federauslegung des Federelement das Dichtelement zurückdrängbar und der Ausgleichsraum füllbar sein.

Vorteilhafterweise kann der Kolben durch einen festen Anschlag am Herausfahren aus dem Gehäuse gehindert sein. Vorteilhafterweise kann die Bewegung des Ventils aus dem Ventilsitz durch Bauelemente zur Krafteinleitung - insbesondere Übertragungselement und Betätigungselement- in seinem Weg begrenzt sein und/oder diese Begrenzung durch einen Anschlag für das Betätigungselement am Gehäuse realisierbar sein.

Vorteilhafterweise kann für das Ventil relativ zum Kolben ein kleiner Weg weiter in Rückstellrichtung vollführbar sein, wobei das Ventil geöffnet wird, bis auch das Ventil in seinem Weg durch einen Anschlag begrenzt wird.

Die erfindungsgemäße Lösung der oben genannten Aufgabe besteht darin, dass der Ausgleichsraum innerhalb der Zylinderbohrung bzw. innerhalb des zylinderraums angeordnet ist. Zudem sind sämtliche Bauelemente zur Abtrennung des Ausgleichs- bzw. Vorratsraumes und zur Aufnahme eines Ausgleichvolumens innerhalb der Zylinderbohrung positioniert. Dieses Ausgleichsvolumen kann bei Betätigung des Kolbens verschlossen werden. Vorteilhaft an dieser erfindungsgemäßen Konstruktion ist, dass eine kompakte Anordnung des Ausgleichsraumes bei einem senkrecht angeordneten realisierbar ist.

Vorteilhafterweise kann Luft sehr servicefreundlich auch von Nichtgeübten entfernt werden, wenn zur Entlüftung oben eine Entlüftungsstelle vorgesehen wird. Die oben erwähnte Servicefreundlichkeit trifft auch auf die Befüllbarkeit zu. Ebenso vorteilhaft kann im oberen Bereich der hydraulische Abgang positioniert sein, durch den das verdrängte Flüssigkeitsvolumen zu dem oder den Aktuatoren, beispielsweise Kupplungs- oder Bremsnehmerzylinder (Bremszange), geleitet werden kann.

Besonders zu erwähnen ist, dass die Unzugänglichkeit zu empfindlichen Bauteilen zu einer gewünschten Manipulationssicherheit führt.

Ein weiterer Vorteil der erfindungsgemäß aufgebauten Betätigungsarmatur ist, dass Druckschläge an keinem Bauteil zu Beschädigungen führen können.

Ein Vorteil der erfindungsgemäßen Konstruktion ist, einen bedingt durch Temperaturschwankungen automatischen Volumenausgleich in einem hydraulischen System zu realisieren, der die Nachteile bekannter Konstruktionen nicht aufweist und andererseits die notwendigen Funktionen realisiert und darüber hinaus auch noch Komfortmerkmale aufweist. Insbesondere in der Anwendung eines solchen hydraulischen Systems an Modellfahrzeugen ist eine extreme Kompaktheit - wie sie die Erfindung ermöglicht - erforderlich, um dem Original entsprechende skalierte Komponenten realisieren zu können. Das erfindungsgemäße System ist aber nicht auf diesen Anwendungsfall begrenzt. Jedes hydraulische Betätigungssystem ob als Bremssystem, Kupplungsbetätigungssystem, System mit selbst nachstellenden oder auch nicht selbst nachstellenden Kolben kann mit der erfindungsgemäßen Betätigungsarmatur ausgerüstet werden.

Der oben erwähnte automatische Volumenausgleich durch technisch bedingte Erwärmung der Hydraulikflüssigkeit kann innerhalb festgelegter Grenzen erfolgen, um in vorteilhafter Weise den Druckpunkt stabil zu halten. Des weiteren ist die äußerst kleine und kompakte Bauweise der erfindungsgemäßen Konstruktion erwähnenswert, wobei hier insbesondere die erzielte Außenformsymmetrie von Bedeutung ist.

Bedeutungsvoll ist, dass zur Funktion des erfindungsgemäßen Geberzylinders durch einen Hebel oder eine Druckstange auf die eine Seite des in vorteilhafter Weise als Ventilnadel ausgestalteten Ventils eine Kraft aufgebracht werden kann, wobei die Ventilnadel einen vorteilhafterweise kleinen weg zurücklegen muss, bis die andere vorteilhafterweise kegelige Seite mit der zentralen Bohrung des Kolbens einen Ventilsitz bildet.

Die erfindungsgemäße Betätigungsarmatur kann insbesondere an Motorrädern, aber auch an allen anderen Arten von Fahrzeugen eingesetzt werden, bei denen hebelbetätigte hydraulische Systeme vorgesehen sind, beispielsweise an Modellfahrzeugen, Fahrrädern oder Behinderten-Fahrzeugen.

Weitere Anwendungsgebiete der Erfindung umfassen beispielsweise die Betätigung von Türen. Wegen der geringen Baugröße kann die erfindungsgemäße Betätigungsarmatur bei der Übertragung der Bewegung eines Türgriffs auf das Türschloss einer Fahrzeugtür eingesetzt werden.

Nachfolgend sind Ausführungsbeispiele einer erfindungsgemäßen Betätigungsarmatur anhand der Zeichnungen näher erläutert. Es zeigt:
- Fig. 1: eine Schnittdarstellung einer erfindungsgemäßen Betätigungsarmatur.
- Fig. 2: eine Betätigungsarmatur gemäß Fig. 1 mit daran angeschlossenem Aktuator.
- Fig. 3: eine vergrößerte Darstellung der Fig. 1.
- Fig. 4: eine der Fig. 1 entsprechende Ansicht der Ausführung von Fig. 1, wobei mehr Flüssigkeit in den Ausgleichsraum eingefüllt ist.
- Fig. 5: einen Ausschnitt von Fig. 4 im Kreis V.
- Fig. 5a: eine der Fig. 5 entsprechende Ansicht einer Variante der Ausführungsform von Fig. 1.
- Fig. 5b: eine der Fig. 5 entsprechende Ansicht einer weiteren Variante der Ausführungsform von Fig. 1.
- Fig. 5c: eine der Fig. 5 entsprechende Ansicht einer weiteren Variante der Ausführungsform von Fig. 1.
- Fig. 5d: eine der Fig. 5 entsprechende Ansicht einer weiteren Variante der Ausführungsform von Fig. 1.
- Fig. 5e: eine der Fig. 5 entsprechende Ansicht einer weiteren Variante der Ausführungsform von Fig. 1.
- Fig. 6: einen Ausschnitt von Fig. 4 zur Erläuterung einer Variante der Ausführungsform von Fig. 1, welche Anspruch 1 nicht stützt.

In der folgenden Beschreibung der Ausführungsbeispiele werden unter anderem folgende Bezugszeichen verwendet:
- 1: Betätigungsarmatur
- 2: Gehäuse
- 3: Zylindrische Bohrung / Zylinderraum /
- 31: Druckkammer
- 4: Abgang
- 5: Kolben
- 51: Ausgleichsraumabschnitt
- 52: Ventilabschnitt
- 53: Dichtungsnutabschnitt
- 54: Dichtelement
- 55: Vorsprung
- 56: Fortsatz
- 6: Federelement
- 7: Betätigungselement
- 8: Ventil
- 9: Bohrung
- 10: Ventilsitz
- 11: Übertragungselement
- 12, 12': Dichtelement
- 13, 13': Übertragungselement
- 14: Federelement
- 15: Anschlag
- 16: Anschlag
- 17: Ventil
- 18: Aktuator
- 19: Ausgleichsraum, Vorratsbehälter
- 19': Ausgleichsraum
- 20: Entlüftungsbohrung
- 101: stumpfer Ventilnadelkopf
- 102: Dichtungselement
- 103: Fase
- 104: balliger Ventilnadelkopf
- 105: Vertiefung
- W: Weg

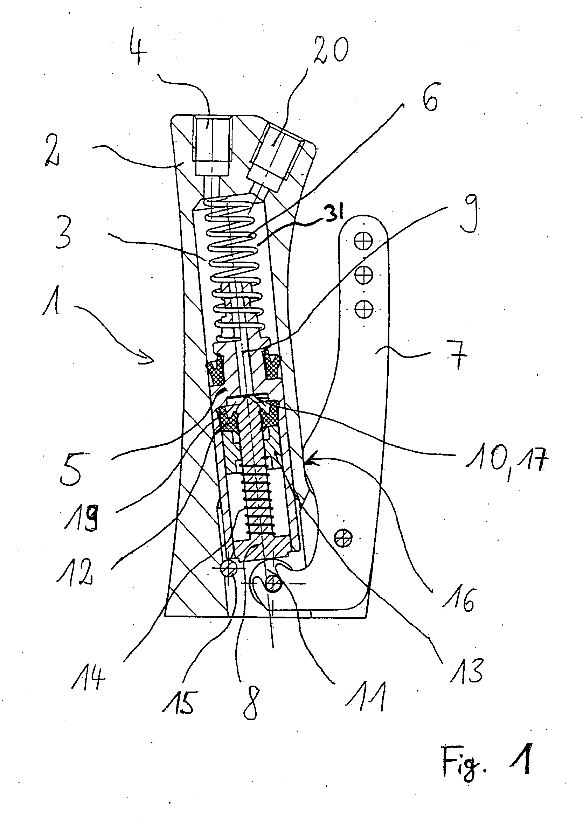

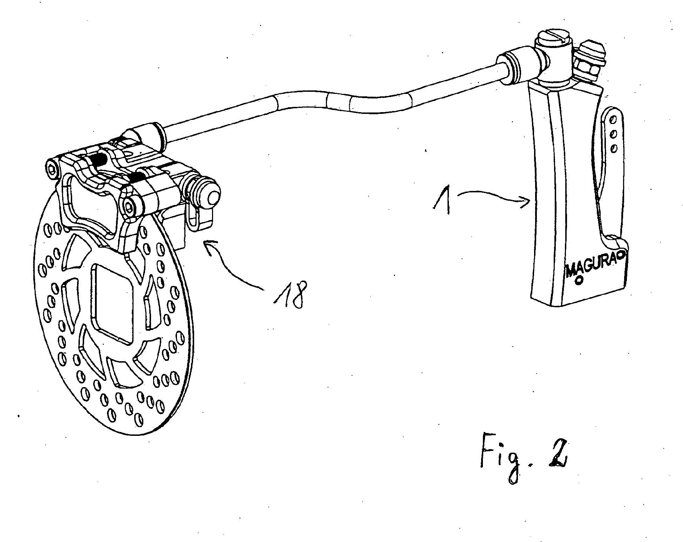

Fig. 1 zeigt eine Betätigungsarmatur 1, die aus einem Gehäuse 2 mit einer im wesentlichen zylindrischen Bohrung 3 zur Aufnahme weiterer Elemente besteht. Vorteilhafterweise ist die als Zylinderraum dienende Bohrung 3 nahezu senkrecht, um an der höchsten Stelle eine Entlüftungsbohrung 20 anbringen zu können, über die zum Beispiel mittels eines - nicht näher dargesellten - Ventils eine Entlüftung von unerwünschter Luft erfolgen kann. Im oberen Bereich ist ein hydraulischer Abgang 4 positioniert, durch den das verdrängte Flüssigkeitsvolumen zu mindestens einem Aktuator 18 geleitet wird (siehe Fig. 2).

Der die Flüssigkeit bei Betätigung der Betätigungsarmatur 1 verdrängende Kolben 5 ist im 3 positioniert, vorzugsweise durch ein als Druckfeder ausgestaltetes Federelement 6 vorgespannt und kann einen konstruktiv festgelegten Hub vollführen, wenn über weitere nachfolgend beschriebene Elemente eine Kraftbeaufschlagung erfolgt, zum Beispiel mittels einem Betätigungselement 7. Das Betätigungselement 7 ist vorzugsweise als Hebel oder - nicht näher dargestellt - als Druckstange ausgestaltet.

In einem im Kolben 5 befindlichen Ausgleichsraum 19, wobei dieser Ausgleichsraum 19 auf der der Druckkammer 31 abgewandten Seite liegt, ist ein vorzugsweise als Ventilnadel ausgestaltetes Ventil 8 positioniert. Ein vorzugsweise kegelig ausgeführtes Ende dieser Ventilnadel 8 realisiert in Korrespondenz mit einer zentralen Bohrung 9 des Kolbens 5 einen Ventilsitz 10, wobei deren anderes Ende so ausgeführt ist, dass eine Kraft eingeleitet werden kann. Vorzugsweise ist dieses Ende als Fläche ausgebildet, auf welche ein als Rolle ausgebildetes Übertragungselement 11 die auf die Ventilnadel 8 einzuleitende Kraft von einem Hebel 7 überträgt.

Der sich durch die äußere Hülle der Ventilnadel 8 und die innere Hülle des Kolbens 5 ausbildende zylindrische rohrförmige Raum 19 dient als Aufnahmeraum für das Ausgleichsvolumen, wobei durch ein vorzugsweise federvorgespanntes Dichtelement 12 dieses nach außen abgeschlossen wird. Vorzugsweise ist ein Übertragungselement 13 zwischen dem Dichtelement 12 und einem als Druckfeder ausgestaltetem Federelement 14 angeordnet, um das Dichtelement 12 vor Verkippen und Beschädigung zu schützen.

Der Kolben 5 wird durch einen festen Anschlag 15 am Herausfahren aus dem Gehäuse 2 gehindert. Die Konstruktion ist so ausgeführt, dass trotz angeschlagenem Kolben 5 die Ventilnadel 8 eine Bewegung aus dem Ventilsitz 10 heraus vollführen kann, ehe sie selbst durch die Bauelemente zur Krafteinleitung - Übertragungselement 11 und Betätigungselement 7 - in ihrem Weg begrenzt wird. Zusätzlich kann diese Begrenzung durch einen Anschlag 16 des Hebels 7 am Gehäuse 2 realisiert sein.

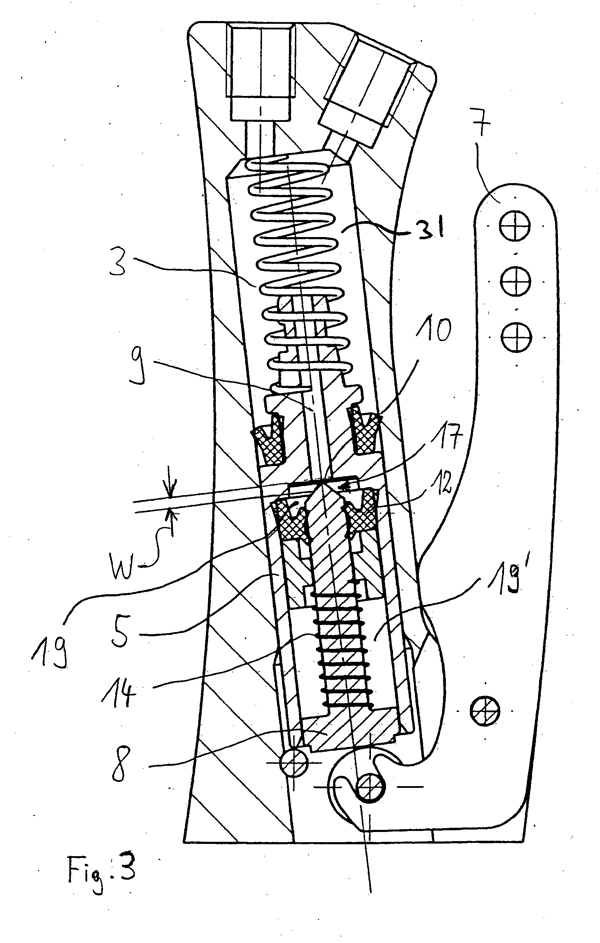

Durch den Hebel 7 wird auf die vorzugsweise als Fläche ausgebildete Seite der Ventilnadel 8 eine Kraft aufgebracht. Dadurch vollführt diese einen vorzugsweise kleinen Weg W, bis die andere kegelartig ausgestaltete Seite mit der zentralen Bohrung 9 des Kolbens 5 einen Ventilsitz 10 bildet (siehe Fig. 3). Dieser Ventilsitz 10 dichtet hydraulisch den als Ausgleichsraum dienenden Raum 19 von dem als Druckkammer 31 fungierenden Bereich des Zylinderraums 3 ab und bildet somit ein Ventil 17. Die nun formschlüssige Verbindung überträgt die eingeleitete Kraft auf den Kolben 5 und dieser vollführt die gewünschte Verdrängungsbewegung in der Druckkammer 31. Nach Reduzierung der eingeleiteten Kraft bewegt sich der Kolben 5 unterstützt durch die vorzugsweise vorhandene Druckfeder 6 wieder in seine Ruhestellung, die durch den festen Anschlag 15 bestimmt wird. Die Ventilnadel 8 kann relativ zum Kolben 3 einen vorzugsweise kleinen Weg weiter in Rückstellrichtung vollführen, so dass das Ventil 17 geöffnet wird, bis auch die Ventilnadel 8 in ihrem Weg durch einen Anschlag 11, 16 begrenzt wird.

Ein durch Erwärmung der Hydraulikflüssigkeit entstehender Volumenzuwachs kann durch das offene Ventil 17 gelangen und wird entsprechend der Federauslegung der auf der Ventilnadel 8 positionierten Druckfeder 14 bei einem vorzugsweise geringen Flüssigkeitsdruck das Dichtelement 12 zurückdrängen und den Ausgleichsraum 19 füllen. Das Dichtelement wird in den mit 19' bezeichneten Ausgleichsraum zurückgedrängt und vergrößert dadurch den die Flüssigkeit aufnehmenden Ausgleichsraum 19 (siehe Fig. 3).

Erkaltet die Hydraulikflüssigkeit wird dieser Prozess reversibel vollführt.

Unabhängig von der Stellung dieses Dichtelementes 12 im Ausgleichsraum 19 kann bei Kraftbeaufschlagung zu jeder Zeit das immer gleiche Volumen in der Druckkammer 31 verdrängt werden. Der Druckpunkt eines Hydrauliksystems bleibt dadurch unverändert.

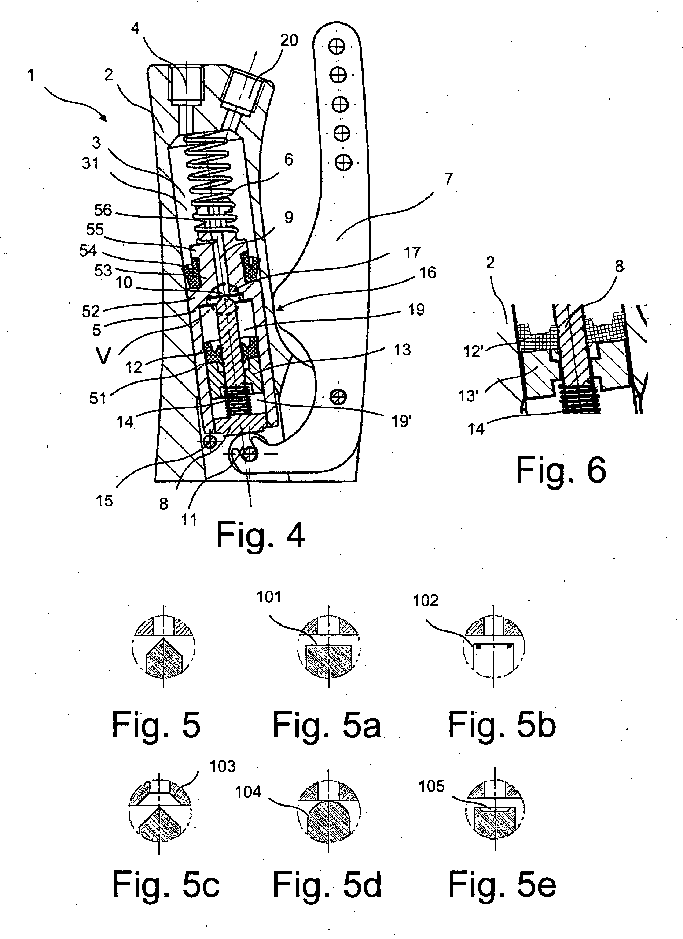

Fig. 4 zeigt eine der Fig. 1 entsprechende Ansicht der Ausführung von Fig. 1, wobei mehr Flüssigkeit in das System eingefüllt ist, wodurch sich der Ausgleichsraum 19 vergrößert. Dazu wird das Übertragungselement 12 in dem Kolben 5 in Fig. 4 nach unten entgegen der Kraft des Federelements 14 verschoben. Das Volumen des Ausgleichsraums 19 ist entsprechend kleiner. Durch den größeren mit Flüssigkeit gefüllten Ausgleichsraum 19 ist es möglich, den Belagverschleiß auszugleichen, wenn beispielsweise als Nehmer ein Bremssattel, wie in Fig. 2 gezeigt, an die Betätigungsarmatur angeschlossen ist.

Bei der in Fig. 4 (und Fig. 1) gezeigten Ausführungsform weist der Kolben 5 einen Ausgleichsraumabschnitt 51, der im Wesentlichen eine zylinderförmige Wandung aufweist, die den Ausgleichsraum 19 und den Ausgleichsraum 19' umschließt. In dem Ausgleichsraumabschnitt 51 ist das Übertragungselement 13 verschiebbar angeordnet. Wenn mehr Flüssigkeit in dem Ausgleichsraum 19 aufgenommen werden muss (z.B. Temperaturausgleich), verschiebt sich das Übertragungselement 13 entgegen der Kraft des Federelements 14 in Richtung des Ausgleichsraums 19, wobei die dort vorhandene Luft (oder Gas) komprimiert oder nach außen verdrängt wird. Wenn umgekehrt Flüssigkeit aus dem Ausgleichsraum 19 eingebracht werden soll, rückt das Übertragungselement 13 in Richtung der Kraft des Federelements 14 in Richtung des Ausgleichsraums 19.

Durch das Beaufschlagen des Übertragungselements 13 mit einem Federelement 14, ist es möglich, die Betätigungsarmatur je nach Bedarf in einer beliebigen Orientierung zu installieren. Dadurch kann eine gute Anpassung an den bei dem jeweiligen Anwendungsfall verfügbaren Bauraum erfolgen.

Wenn eine Selbstentlüftung gewünscht ist, besteht die Möglichkeit, die Betätigungsarmatur derart zu orientieren, dass der Ausgleichsraum 19 oben angeordnet ist, so dass sich eventuell in dem System vorhandene Luft in dem Ausgleichsraum sammeln kann. Damit eine Selbstentlüftung stattfinden kann, sollte ein Bereich des Ausgleichsraums bezogen auf die Schwerkraft oberhalb der Ventilöffnung liegen, damit sich in diesem Luft sammeln kann, die nicht wieder in das System beim Völumenausgleich gelangt.

In dem Kolben 5 ist ein Ventilabschnitt 52 vorgesehen, in dem das Ventil 10 angeordnet ist, dass die Bohrung 9 (Durchgang) wie oben beschrieben verschließen kann.

Der Kolben 5 weist ferner einen Dichtungsnutabschnitt 53 auf, in dem ein Dichtelement 54 zur Abdichtung gegen die Innenwandung des Zylinderraums 3 vorgesehen ist. Der Dichtungsnutabschnitt 53 wird durch einen Vorsprung 55 abgeschlossen, an den sich ein Fortsatz 56 anschließt, auf dem das Federelement 6 angeordnet ist. Die Bohrung 9 erstreckt sich von dem Ventilabschnitt 52 durch den Dichtungsnutabschnitt 53 und den Fortsatz 56 zu dem Druckraum 31. Alternativ könnte sich die Bohrung beispielsweise am Ende des Dichtungsabschnitt gegebenenfalls auch oder nur seitlich zu dem Druckraum erstrecken.

Fig. 5 zeigt einen Ausschnitt von Fig. 4 im Kreis V. Die Figuren 5a bis 5e zeigen der Fig. 5 entsprechende Ansichten von Varianten der Ausführungsform von Fig. 1. In Fig. 5a ist ein stumpfer Ventilnadelkopf 101 dargestellt. In Fig. 5b ist ein stumpfer Ventilnadelkopf dargestellt, in dem ein Dichtungselement 102 angeordnet ist, das sich um die Ventilöffnung erstreckt. In Fig. 5c ist eine Ventilöffnung mit einer Fase 103 dargestellt. In Fig. 5d ist ein balliger Ventilnadelkopf 104 dargestellt. In Fig. 5e ist ein stumpfer Ventilnadelkopf mit einer Vertiefung 105 in der Ventilnadelkopffläche dargestellt. Die übrigen Elemente entsprechen jeweils der in Fig. 1 gezeigten Ausführung, auf deren Beschreibung verwiesen wird.

Fig. 6 zeigt einen Ausschnitt von Fig. 4 zur Erläuterung einer Variante der Ausführungsform von Fig. 1, welche Anspruch 1 nicht stützt. Er werden nur die Unterschiede beschrieben und im Übrigen auf die obige Beschreibung verwiesen. Der Kolben 5 weist keinen Ausgleichsraumabschnitt auf. Stattdessen weist das Übertragungselement 13' und das Dichtungselement 12' einen entsprechend größeren Durchmesser auf. Der Ausgleichsraum 19 wird somit durch die Innenwand des Zylinderraums 3, den Kolben 5 und das Übertragungselement 13' bzw. das Dichtungselement 12' definiert.

## Patentansprüche

1. Betätigungsarmatur, insbesondere Brems- und/oder Kupplungsarmatur und/oder Türschlossbetätigungsarmatur, mit einem Gehäuse (2), in welchem ein in einem Zylinderraum (3) mittels einem Betätigungselement (7) zur Verdrängung von Flüssigkeit aus dem als Druckraum (31) fungierenden Bereich des Zylinderraums (3) verschiebbarer Kolben (5) angeordnet ist, wobei ein Ausgleichsraum (19) innerhalb des Zylinderraums (3) angeordnet ist, wobei der Ausgleichsraum (19) von dem als Druckraum (31) fungierenden Bereich des Zylinderraums (3) abtrennbar ist, **dadurch gekennzeichnet, dass** der Kolben (5) einen Ausgleichsraumabschnitt (51) aufweist, der im Wesentlichen eine zylinderförmige wandlung umfasst, wobei der Ausgleichsraum (19) innerhalb des Ausgleichsraumabschnitts (51) des Kolbens (5) angeordnet ist, wobei der Ausgleichsraum (19) durch ein Dichtelement (12) gegenüber der Umgebung abgedichtet ist, das gegen die zylinderförmige Wandung des Ausgleichsraumabschitts (51) abdichtet.

2. Betätigungsarmatur nach Anspruch 1, bei der der Ausgleichsraum (19) im Wesentlichen durch die Innenwandung des Ausgleichsraumabschnitts (51) des Kolbens (5) und ein Übertragungselement definiert ist.

3. Betätigungsarmatur nach einem der vorhergehenden Ansprüche, bei der der Kolben (5) in dem (3) zwischen dem als Druckraum (31) fungierenden Bereich des Zylinderraums (3) und dem Ausgleichsraum (19) angeordnet ist.

4. Betätigungsarmatur nach einem der vorhergehenden Ansprüche, bei der in dem Kolben (5) ein Durchgang ausgebildet ist, der den als Druckraum (31) fungierenden Bereich des Zylinderraums (3) mit dem Ausgleichsraum (19) verschließbar verbindet.

5. Betätigungsarmatur nach einem der vorhergehenden Ansprüche, bei der eine Ventileinrichtung innerhalb des Kolbens (5) angeordnet ist.

6. Betätigungsarmatur nach Anspruch 5, bei der die Ventileinrichtung derart ausgebildet ist, dass bei der Betätigung der Betätigungsarmatur die Ventileinrichtung schließt und anschließend den Kolben (5) mit der Betätigungskraft beaufschlagt.

7. Betätigungsarmatur nach Anspruch 4 und einem der Ansprüche 5 bis 6, bei der die Ventileinrichtung eine Ventilnadel und einen an dem Durchgang ausgebildeten Ventilsitz aufweist.

8. Betätigungsarmatur nach einem der vorhergehenden Ansprüche, bei der der Kolben (5) einen auf der dem Zylinderraum (3) abgewandten Seite liegenden Hohlraum aufweist, der als der Ausgleichsraum (19) fungiert.

9. Betätigungsarmatur nach einem der vorhergehenden Ansprüche, bei der das Betätigungselement (7) als Hebel oder Druckstange ausgeführt ist.

10. Betätigungsarmatur nach einem der vorhergehenden Ansprüche, bei der der Kolben (5) durch einen gehäuse festen Anschlag (15; 16) am Herausfahren aus dem Gehäuse (2) gehindert ist.

11. Betätigungsarmatur nach Anspruch 1, bei der der Kolben (5) eine Bohrung (9) aufweist, welche bei Betätigung des Kolbens (5) mittels einem Ventil (8, 10; 17) verschließbar ist und eine Abtrennung des Ausgleichsraumes (19) von dem als Druckraum (31) fungierenden Bereich des Zylinderraums (3) bewerkstelligt.

12. Betätigungsarmatur nach Anspruch 11, bei der auf die eine Seite des Ventils (8, 10, 17) eine Kraft aufbringbar ist, wobei das Ventil (8, 10; 17) einen kleinen Weg (W) zurücklegen muss, bis die andere Seite des Ventils, die mit der Bohrung (9) des Kolbens (5) einen Ventilsitz (10) bildet, die Bohrung (9) verschließt, wobei bei weiterer Krafteinleitung die nun formschlüssige Verbindung die eingeleitete Kraft auf den Kolben (5) überträgt, so dass von diesem eine gewünschte Verdrängungsbewegung im Druckraum (3) bewerkstelligbar ist.

13. Betätigungsarmatur nach Anspruch 12, bei der der vom Ventil (8, 10; 17) zurückzulegende Weg (W) in einem Bereich zwischen 0,1 mm und 5 mm liegt.

14. Betätigungsarmatur nach einem der Ansprüche 12 bis 13, bei der das mit der Bohrung (9) den Ventilsitz (10) realisierende Ende des Ventils (8, 10; 17) mit kegelartiger Form ausgeführt ist, wobei dessen anderes Ende zur Krafteinleitung mit einer Fläche ausgebildet ist, auf welche mittels einem als Rolle ausgebildeten Übertragungselement (11) die auf das Ventil (8, 10; 17) einzuleitende Kraft vom Betätigungselement (7) übertragbar ist.

15. Betätigungsarmatur nach einem der Ansprüche 12 bis 14, bei der das den Ausgleichsraum (19) gegenüber der Umgebung begrenzende Dichtelement (12) auf dem Ventil (8, 10; 17) verschiebbar angeordnet ist, wobei sich das Dichtelement (12) auf der dem Ausgleichsraum (19) abgewandten Seite gegen ein Federelement (14) abstützt und der Ausgleichsraum (19) variabel und/oder automatisch dem aufzunehmenden Flüssigkeitsvolumen anpassbar ist.

## Claims

1. Actuation fitting, in particular brake and/or clutch fitting and/or door lock actuation fitting, comprising a housing (2) accommodating a plunger (5) slidable in a cylinder space (3) by means of an actuation member (7) for displacing liquid from the cylinder space (3) area functioning as a pressure chamber (31), wherein a compensating chamber (19) is arranged inside the cylinder space (3), wherein the compensating chamber (19) can be separated from the cylinder space (3) area functioning as a pressure chamber (31), **characterized in that** the plunger (5) has a compensating chamber section (51) which essentially comprises a cylindrical wall, wherein the compensating chamber (19) is arranged inside the compensating chamber section (51) of the piston (5), wherein the compensating chamber (19) is sealed from the environment by a sealing element (12) which seals against the cylindrical wall of the compensating chamber section (51).

2. Actuation fitting according to claim 1, wherein the compensating chamber (19) is essentially defined by the inner wall of the compensating chamber section (51) of the plunger (5) and a transfer member.

3. Actuation fitting according to any of the preceding claims, wherein the plunger (5) is arranged in the cylinder space (3) between the cylinder space (3) area functioning as a pressure chamber (31) and the compensating chamber (19).

4. Actuation fitting according to any of the preceding claims, wherein a passage is formed in the plunger (5), said passage connecting the cylinder space (3) area functioning as the pressure chamber (31) to the compensating chamber (19) in a closable fashion.

5. Actuation fitting according to any of the preceding claims, wherein a valve means is arranged inside the plunger (5).

6. Actuation fitting according to claim 5, wherein the valve means is made in such a way that the valve means closes upon actuation of the actuation fitting and subsequently applies an actuation force to the plunger (5).

7. Actuation fitting according to claim 4 and any of claims 5 to 6, wherein the valve means has a valve needle and a valve seat formed on the passage.

8. Actuation fitting according to any of the preceding claims, wherein the plunger (5) has a cavity on the side facing away from the cylinder space (3), said cavity functioning as the compensating chamber (19).

9. Actuation fitting according to any of the preceding claims, wherein the actuation member (7) is made as a lever or a push bar.

10. Actuation fitting according to any of the preceding claims, wherein the plunger (5) is prevented from leaving the housing (2) by a housing-fixed stop (15; 16).

11. Actuation fitting according to claim 1, wherein the plunger (5) has a bore (9) which can be closed by means of a valve (8, 10; 17) upon actuation of the plunger (5) and accomplishes a separation of the compensating chamber (19) from the cylinder space (3) area functioning as a pressure chamber (31).

12. Actuation fitting according to claim 11, wherein a force can be applied to one side of the valve (8, 10; 17), wherein the valve (8, 10; 17) has to travel a small distance (W) until the other side of the valve, which forms a valve seat (10) with the bore (9) of the plunger (5), closes the bore (9), wherein upon further application of force the then positive connection transfers the applied force to the plunger (5), and therefore the latter can accomplish a desired displacement movement in the pressure chamber (3).

13. Actuation fitting according to claim 12, wherein the distance (W) to be traveled by the valve (8, 10; 17) ranges between 0.1 mm and 5 mm.

14. Actuation fitting according to any of claims 12 to 13, wherein the valve (8, 10; 17) end forming the valve seat (10) together with the bore (9) has a conical shape, wherein the other end thereof has, for the application of force, an area to which the force to be applied to the valve (8, 10; 17) can be transferred from the actuation element (7) by means of transfer element (11) made as a roll.

15. Actuation fitting according to any of claims 12 to 14, wherein the sealing element (12) confining the compensating chamber (19) facing the surrounding is slidably arranged on the valve (8, 10; 17), wherein the sealing element (12) is supported against a spring member (14) on the side facing away from the compensating chamber (19) and the compensating chamber (19) is variably and/or automatically adaptable to the liquid volume to be received.

## Revendications

1. Groupe d'actionnement, en particulier groupe de freinage et/ou d'embrayage et/ou groupe d'actionnement de serrure de porte, comprenant un boîtier (2) dans lequel est agencé un piston (5) capable de se déplacer dans une chambre cylindrique (3) au moyen d'un élément d'actionnement (7) pour refouler un liquide hors de la zone de la chambre cylindrique (3) qui fait office de chambre de pression (31), dans lequel une chambre de compensation (19) est agencée à l'intérieur de la chambre cylindrique (3), ladite chambre de compensation (19) étant séparable de la zone de la chambre cylindrique (3) qui fait office de chambre de pression (31), **caractérisé en ce que** le piston (5) comprend une portion de chambre de compensation (51) qui inclut essentiellement une paroi de forme cylindrique, la chambre de compensation (19) est agencée à l'intérieur de la portion de chambre de compensation (51) du piston (5), et la chambre de compensation (19) est étanchée par rapport à l'environnement au moyen d'un élément d'étanchéité (12) qui assure une étanchéité contre la paroi de forme cylindrique de la portion de chambre de compensation (51).

2. Groupe d'actionnement selon la revendication 1, dans lequel la chambre de compensation (19) est essentiellement définie par la paroi intérieure de la portion de chambre de compensation (51) du piston (5) et par un élément de transmission.

3. Groupe d'actionnement selon l'une des revendications précédentes, dans lequel le piston (5) est agencé dans la chambre cylindrique (3) entre la zone de la chambre cylindrique (3) qui fait office de chambre de pression (31) et la chambre de compensation (19).

4. Groupe d'actionnement selon l'une des revendications précédentes, dans lequel une traversée est ménagée dans le piston (5), laquelle relie la zone de la chambre cylindrique (3) qui fait office de chambre de pression (31) avec la chambre de compensation (19) d'une manière capable d'être obturée.

5. Groupe d'actionnement selon l'une des revendications précédentes, dans lequel un système de valve est agencé à l'intérieur du piston (5).

6. Groupe d'actionnement selon la revendication 5, dans lequel le système de valve est réalisé de telle manière que lors de l'actionnement du groupe d'actionnement le système de valve se ferme et attaque ensuite le piston (5) avec la force d'actionnement.

7. Groupe d'actionnement selon la revendication 4 et l'une des revendications 5 et 6, dans lequel le système de valve comprend un pointeau de valve et un siège de valve ménagé au niveau de la traversée.

8. Groupe d'actionnement selon l'une des revendications précédentes, dans lequel le piston (5) comporte une cavité située sur le côté détourné de la chambre cylindrique (3), qui fait office de chambre de compensation (19).

9. Groupe d'actionnement selon l'une des revendications précédentes, dans lequel l'élément d'actionnement (7) est réalisé sous forme de levier ou de tige de poussée.

10. Groupe d'actionnement selon l'une des revendications précédentes, dans lequel le piston (5) est empêché de sortir hors du boîtier (2) au moyen d'une butée (15 ; 16) solidaire du boîtier.

11. Groupe d'actionnement selon la revendication 1, dans lequel le piston (5) comporte un perçage (9) qui est susceptible d'être obturé lors de l'actionnement du piston (5) au moyen d'une valve (8, 10 ; 17), et entraîne une séparation de la chambre de compensation (19) vis-à-vis de la zone de la chambre cylindrique (3) qui fait office de chambre de pression (31).

12. Groupe d'actionnement selon la revendication 11, dans lequel une force est susceptible d'être appliquée sur un côté de la valve (8, 10 ; 17), dans lequel la valve (8, 10 ; 17) doit parcourir une faible course (W) jusqu'à ce que l'autre côté de la valve, qui forme un siège de valve (10) avec le perçage (9) du piston (5), obture le perçage (9), et lors d'une poursuite de l'application de la force, la liaison désormais en coopération de formes transmet la force appliquée au piston (5), de sorte que celui-ci peut exécuter un mouvement de refoulement souhaité dans la chambre de pression (3).

13. Groupe d'actionnement selon la revendication 12, dans lequel la course (W) que doit parcourir la valve (8, 10 ; 17) est dans une plage entre 0,1 mm et 5 mm.

14. Groupe d'actionnement selon l'une des revendications 12 et 13, dans lequel l'extrémité de la valve (8, 10 ; 17) qui réalise le siège de valve (10) avec le perçage (9), est réalisée avec une forme semblable à un cône, et son autre extrémité est réalisée, pour l'application d'une force, avec une surface sur laquelle peut être transmise la force à appliquer sur la valve (8, 10 ; 17) depuis l'élément d'actionnement (7) au moyen d'un élément de transmission (11) réalisé sous forme de galet.

15. Groupe d'actionnement selon l'une des revendications 12 à 14, dans lequel l'élément d'étanchéité (12) qui délimite la chambre de compensation (19) vis-à-vis de l'environnement est agencé de façon déplaçable sur la valve (8, 10 ; 17), dans lequel l'élément d'étanchéité (12) s'appuie contre un élément à ressort (14) du côté détourné de la chambre de compensation (19), et la chambre de compensation (19) est susceptible d'être ajustée de façon variable et/ou automatique au volume de liquide à absorber.
